# EUROPEAN PATENT SPECIFICATION

(11) **EP 3 748 323 B1**
(45) Date of publication and mention of the grant of the patent: **12.01.2022**
(21) Application number: 19177936.2
(22) Date of filing: 03.06.2019
(51) Int. Cl.: G01L 9/00, G01L 13/02

(54) **DIFFERENTIAL PRESSURE TRANSDUCER**
DIFFERENZDRUCKSENSOR
CAPTEUR DE PRESSION DIFFÉRENTIELLE

(43) Date of publication of application: 09.12.2020
(73) Proprietor: HUBA CONTROL AG, 5436 Würenlos (CH)
(72) Inventor: Arzner, Thomas, 8451 Kleinendalfingen (CH)
(74) Representative: Schaad, Balass, Menzl & Partner AG

(56) References cited:
- JP-A- S 571 941
- JP-A- H10 132 677
- US-A1- 2015 362 394
- US-A1- 2017 363 497
- US-A1- 2019 113 412

## Description

The present disclosure relates to a differential pressure transducer. More particularly, the present disclosure focuses on beam configurations for measuring small values of differential pressure. The present disclosure also relates to a bridge circuit for converting mechanical strains into an electric output signal.

Strain gauge beams are commonly employed to measure differential pressure. The patent US4791818 issued on 20 December 1988 discloses a differential pressure transducer with a cantilever beam 30. The sensor of US4791818 comprises a strain gauge beam 46 arranged inside a sensor body 36. An electric sensor 49 such as a piezoelectric ceramic element is affixed to the surface of the strain gauge beam 46. The arrangement employs wires 53, 54 to transmit the electric signal out of the sensor body 36.

A measurement of differential pressure in accordance with US4791818 is potentially influenced by the orientation of the cantilever beam sensor 30. Also, the disclosure of US4791818 lacks a sophisticated approach that allows for conversion of particularly small mechanical strains into electric signals.

The patent US5844141 issued on 1 December 1998. US5844141 teaches a sensor 10 with two silicon layers 11a, 11b enclosing a central layer 12. The central layer 12 has two beams 16. The beams 16 of US5844141 form a resonantly vibratable stress-sensitive member. The twin vibratable beams 16 connect via electrically conductive channels 23 to an electric driving signal. The arrangement determines changes in pressure from changes in the resonant frequency of the vibratable beams 16.

The resonant frequency of the beams 16 of US5844141 is influenced by ambient factors such as temperature. The sensor of US5844141 thus employs a vibratable fork 20 to compensate for changes in temperature.

The patent US7290453B2 issued on 6 November 2007. US7290453B2 discloses a pressure sensor assembly with piezo-resistive strain gauges 13 disposed on a force sensing beam. The piezo-resistive strain gauges 13, 14 of US7290453B2 electrically connect to a Wheatstone bridge. The Wheatstone bridge magnifies the conversion of forces into electric signals. US7290453B2 thereby tackles the challenge of efficient sensors for low pressures.

The patent US7290453B2 acknowledges that thin diaphragms exhibit shortcomings. The specification teaches an integral diaphragm-beam and diaphragm-diaphragm approach to obviate problems related to thin diaphragms.

Diaphragm-beam configurations are inherently prone to hysteresis. That is, a diaphragm flexes when a pressure is applied to the diaphragm. As the pressure lowers, the diaphragm would ideally return to its previous position. In an actual arrangement, the diaphragm does not fully return to its previous position.

A patent application US2014/0319628A1 was filed on 8 April 2014 and was published on 30 October 2014. US2014/0319628A1 teaches a physical quantity detection device and a physical quantity detector.

An international patent application WO95/03532A1 was filed on 19 July 1994 and was published on 2 February 1995. WO95/03532A1 discloses a cantilevered microbeam temperature sensor.

A European patent application EP1953516A1 was filed on 31 January 2007. EP1953516A1 was published on 6 August 2008. EP1953516A1 teaches a micromechanical pressure sensing device.

A patent application US2011/005323A1 was filed on 8 April 2009 and was published on 13 January 2011. US2011/005323A1 deals with a pressure sensor. The patent document US5177661A issued on 5 January 1993. An application for this patent was filed on 6 March 1992. US5177661A teaches a silicon-on-insulator diaphragm sensor.

A patent application US2005/103114A1 was filed on 23 May 2003 and was published on 19 May 2005. US2005/103114A1 deals with ultraminiature pressure sensors and probes.

A patent application US2017/363497A1 was filed on 2 June 2017 and was published on 21 December 2017. A notice of allowance in respect of this application issued on 3 January 2019. As from 16 April 2019, there is a patent US10260977. US2017/363497A1 discloses a differential pressure transducer and a diaphragm-beam configuration 1. The diaphragm-beam configuration 1 comprises a frame 2 and a paddle 3. A gap 5 is interposed between the frame 2 and the paddle 3. A diaphragm 9 is mounted to the paddle 3 and to a surface of the frame 2. The diaphragm 9 covers the gap 5 between the frame 2 and the paddle 3.

A patent application US2015/362394A1 was filed by THE UNIVERSITY OF TOKYO on 26 December 2013. The application was published on 17 December 2015. US2015/362394A1 deals with a pressure-sensitive sensor.

The instant disclosure improves on differential pressure transducers with beam configurations. The instant disclosure aims at providing a sensor operable to generate a signal indicative of small values of differential pressure.

### Summary

The instant disclosure teaches a differential pressure transducer with a beam configuration. The beam configuration comprises an arcuate member interposed between a frame and a resilient beam. An elastomer material fills the gap. The elastomer material seals the arrangement such that a (gaseous) fluid can applying a pressure to and deflect the resilient beam. By choosing a suitable material for the arcuate member, the arrangement will withstand temperatures of up to 420 Kelvins.

Strain gauges are diffused into, implanted into, or affixed to a portion of the beam. The strain gauges convert strains within the beam into (electric) signals.

It is an object of the instant disclosure to provide a beam configuration and/or a differential pressure transducer with minimum hysteresis.

It is another object of the instant disclosure to provide a resilient beam configuration and/or a differential pressure transducer that is accurate (substantially) regardless of its orientation.

It is still another object of the instant disclosure to miniaturize beam configurations and/or differential pressure transducers.

It is also an object of the instant disclosure to provide a beam configuration and/or a differential pressure transducer that responds to small differential pressures.

It is also an object of the instant disclosure to provide a beam configuration and/or a differential pressure transducer that consumes less electric power than comparable hot wire flow meters.

The present disclosure further provides a circuit for heating, cooling, air-conditioning and/or ventilation that comprises a differential pressure transducer and/or a beam configuration in accordance with the instant disclosure.

The present disclosure still further provides a circuit for heating, cooling, air-conditioning and/or ventilation that comprises a differential pressure transducer and/or a beam configuration in accordance with the instant disclosure, wherein the circuit is a variable air volume system.

### Brief description of the drawings

Various features will become apparent to those skilled in the art from the following detailed description of the disclosed non-limiting embodiments. The drawings that accompany the detailed description can be briefly described as follows:
FIG 1 is a plan view of a cantilevered beam structure according to the instant disclosure.
FIG 2 is a cross-section view of a cantilevered beam structure according to the instant disclosure.
FIG 3 is a schematic of a bridge circuit made up of strain gauges.
FIG 4 is a cross-section view of a differential pressure transducer according to the instant disclosure.

### Detailed decription

The beam structure 1 of the instant disclosure forms the sensor element of a differential pressure transducer. The differential pressure transducer comes with a housing with at least two ports. These ports each connect to conduits. The differential pressure transducer disclosed herein is operable to determine differential pressure between the two ports.

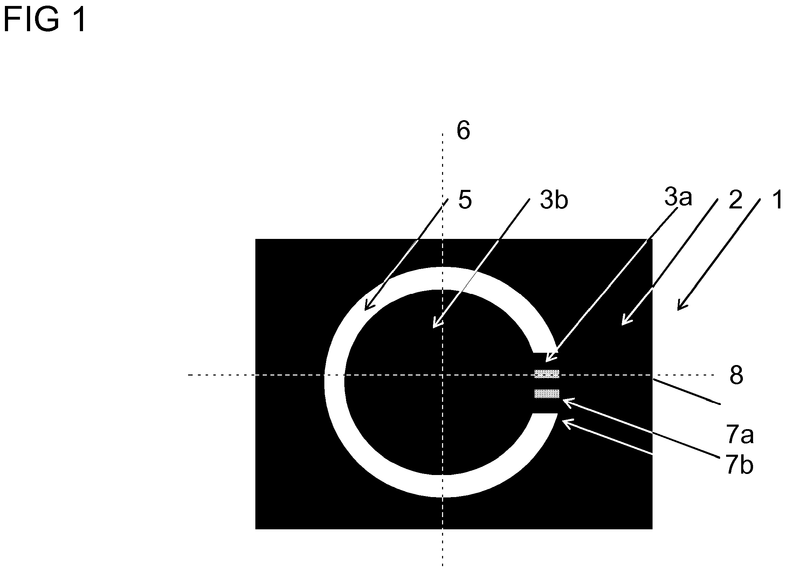

FIG 1 shows a beam structure 1 which forms a sensor element. The resilient beam structure 1 comprises a frame 2 and a resilient beam 3a, 3b. The resilient beam 3a, 3b comprises an anchor portion 3a. The resilient beam 3a, 3b also comprises a paddle portion 3b. The paddle portion 3b is anchored to the frame 2 via the resilient anchor portion 3a.

The paddle portion 3b and the resilient anchor portion 3a are advantageously integral with the frame 2. They are ideally made of the same material such as a ceramics material. The paddle portion 3b, the anchor portion 3a, and the frame 2 can, by way of non-limiting example, be made of aluminum oxide (Al₂O₃) ceramics. According to a special embodiment, the paddle portion 3b, the anchor portion 3a, and the frame 2 are all made of aluminum oxide ceramics having more than 92% purity. In a preferred embodiment, the paddle portion 3b, the anchor portion 3a, and the frame 2 are made of aluminum oxide having more than 96% purity. In yet another embodiment, aluminum oxide with purity above 98% or even 99% is employed. Higher levels of purity offer benefits in terms of mechanical tightness, mechanical brittleness, and dielectric strength.

An arcuate member 5 connects the paddle portion 3b to the frame 2. The circular portion of the arcuate member 5 largely envelopes the paddle portion 3b. The two ends of the arcuate member 5 point toward the resilient anchor portion 3a.

The arcuate member 5 is made of a polymeric material comprising synthetic rubber. The skilled person understands that the arcuate member 5 is made of a polymeric material having viscoelasticity such as a silicone rubber. Synthetic silicone rubber withstands temperatures up to 420 Kelvins. The use of room-temperature-vulcanizing silicone rubber and/or of silicone rubber cured under ultraviolet light and/or of high-temperature-vulcanizing silicone rubber alleviates manufacture.

The arcuate member 5 is advantageously manufactured using a contact dispensing system such as a piezo actuator system. The system dispenses a fluid such as an uncured silicon resin along a path defined by the arcuate shape of member 5. A fluid dispensing robot can be employed to that end. Ideally, the fluid dispensing robot is a three-axis system.

The paddle portion 3b as shown on FIG 1 is substantially cylindrical. In an alternate embodiment, the cross-section of the paddle portion 3b is quadratic, rectangular or triangular. The paddle portion 3b can take on any suitable shape chosen by the skilled person. The shape of the arcuate member 5 varies accordingly.

In an embodiment, the paddle portion 3b is less than 500 micrometers thick. In a preferred embodiment, the paddle portion 3b is less than 250 micrometers thick. According to another advantageous embodiment, the paddle portion 3b is less than 150 micrometers or even less than 100 micrometers thick. In a special embodiment, the paddle portion 3b is 120 micrometers thick.

Differential pressure transducers having thin paddle portions 3b offer benefits in terms of sensitivity, since thin paddle portions 3b deflect further as a function of differential pressure. Also, thin paddle portions 3b help overcome shortcomings due to g-forces. In a preferred embodiment, the thickness of the anchor portion 3a is the same as the thickness of the paddle portion 3b.

According to an embodiment, the lateral width of the arcuate member 5 is at least the thickness of the paddle portion 3b.

According to a special embodiment, the width of the arcuate member 5 is twice the thickness of the paddle portion 3b. According to yet another embodiment, the thickness of the arcuate member 5 is at least five times the thickness of the paddle portion 3b. According to still another embodiment, the thickness of the paddle portion 3b is more than ten times the thickness of the paddle portion 3b. Wide arcuate members 5 reduce the likelihood of mechanical contact between the paddle portion 3b and the frame 2. Wide arcuate members 5 thus lower the risk of stuck sensor elements.

The length of the paddle portion 3b along a cross-section taken along the line 6 preferably is less than 25 millimeters. According to a preferred embodiment, the length of the paddle portion 3b is less than 20 millimeters. According to a special embodiment, the length of the paddle is less than 15 millimeters or even less than 10 millimeters.

Small paddle portions 3b allow for miniaturization of the differential pressure transducer. A paddle portion 3b less than 150 micrometers thick and having lateral dimensions of less than 15 millimeters allows for a transducer with sensitivity to differential pressures below 3 millibars. Small paddle portions 3b and small resilient beam structures 1 also allow for compact differential pressure transducers.

A paddle portion 3b with lateral dimensions of less than 15 millimeters can be built into a frame 2 with lateral dimensions of 20 millimeters. This length of the frame 2 and the length of the paddle portion 3b are both measured along the same line 6. Accordingly, the size of a differential pressure transducer in the direction of line 6 needs not exceed 23 millimeters.

FIG 1 also shows two strain gauges 7a, 7b diffused into, implanted into, and/or affixed to the resilient anchor portion 3a. The strain gauges 7a, 7b advantageously are resistors 7a, 7b or capacitors 7a, 7b. According a preferred embodiment, the strain gauges 7a, 7b are piezoelectric elements. In yet another embodiment, the strain gauges 7a, 7b are fiber optic strain sensors such as Bragg sensors.

The piezoelectric elements 7a, 7b connect to a current supply via suitable bonding wires. No bonding wires are shown on FIG 1. Bonding wires can also connect the piezoelectric elements 7a, 7b amongst one another. The bonding wires are diffused into, implanted into, and/or affixed to the frame 2 and the anchor portion 3a. The skilled person chooses suitable materials for the bonding wires and also chooses suitable values of electrical resistance of the piezoelectric elements 7a, 7b.

The piezoelectric elements 7a, 7b advantageously come as surface-mounted devices. Key advantages of surface-mounted technology are reductions in size and in weight as well as lower profiles. These key advantages are particularly relevant to miniaturized pressure transducers. In addition, the use of surface-mounted components generally lowers manufacturing costs by affording the use of highly automated equipment in assembly.

In an embodiment, optical strain gauges 7a, 7b connect via optical fibers. The fibers are diffused into, implanted into, and/or affixed to the frame 2 and the anchor portion 3a. Optical fibers and optical strain gauges offer advantages in hazardous environments.

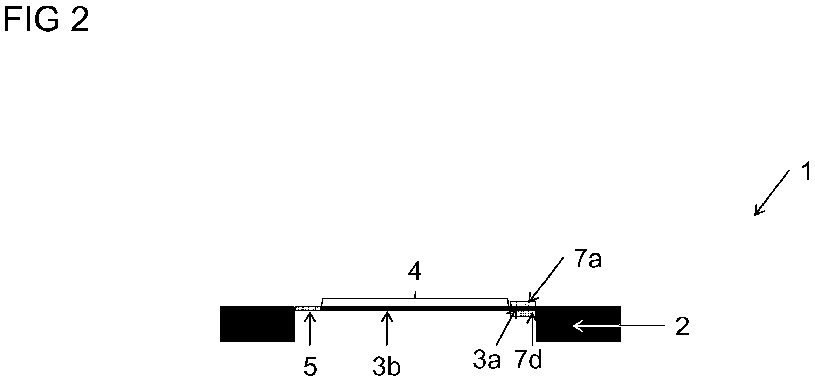

FIG 2 depicts a cross-section view taken along line 8 of FIG 1. The frame 2 as shown on FIG 2 is thicker than the paddle portion 3b. The frame 2 as shown on FIG 2 is also thicker than the resilient anchor portion 3a. In an alternate embodiment, the frame 2, the paddle portion 3b, and the anchor portion 3a all have the same thickness or substantially the same thickness.

The skilled person designs a frame 2 with enough thickness in order that the frame 2 reliably anchors the cantilevered beam. In an embodiment, the frame 2 is between 0.8 millimeters and 2.0 millimeters thick. According to a special embodiment, the thickness of the frame 2 lies between 1.0 millimeters and 1.4 millimeters.

According to an alternate embodiment, the frame 2 is less than 500 micrometers thick. In a preferred embodiment, the frame 2 is less than 250 micrometers thick. According to another advantageous embodiment, the frame 2 is less than 150 micrometers or even less than 100 micrometers thick. In a special embodiment, the frame 2 is 120 micrometers thick.

The skilled person considers the width of the arcuate member 5 as well as maximum deflections of the paddle portion 3b and then implements bulges with suitable dimensions. A bulge of the arcuate member 5 advantageously stands less than 600 micrometers from (a plane defined by) a first surface 4 of the paddle portion 3b. The bulge yet more advantageously stands less than 500 micrometers from (a plane defined by) the first surface of the paddle portion 3b. The bulge still more advantageously stands approximately 300 micrometers from (a plane defined by) the first surface 4 of the paddle portion 3b.

The anchor portion 3a as depicted on FIG 2 has a first side and a second side. The embodiment of FIG 2 has strain gauges 7a, 7d on either side of the anchor portion 3a. According to an embodiment, two strain gauges are diffused into, implanted into, and/or affixed to the first side of anchor portion 3a. Likewise, two more strain gauges are diffused into, implanted into, and/or affixed to the second side of resilient anchor portion 3a. The skilled person chooses suitable strain gauges and suitable connections in accordance with the above notes on FIG 1.

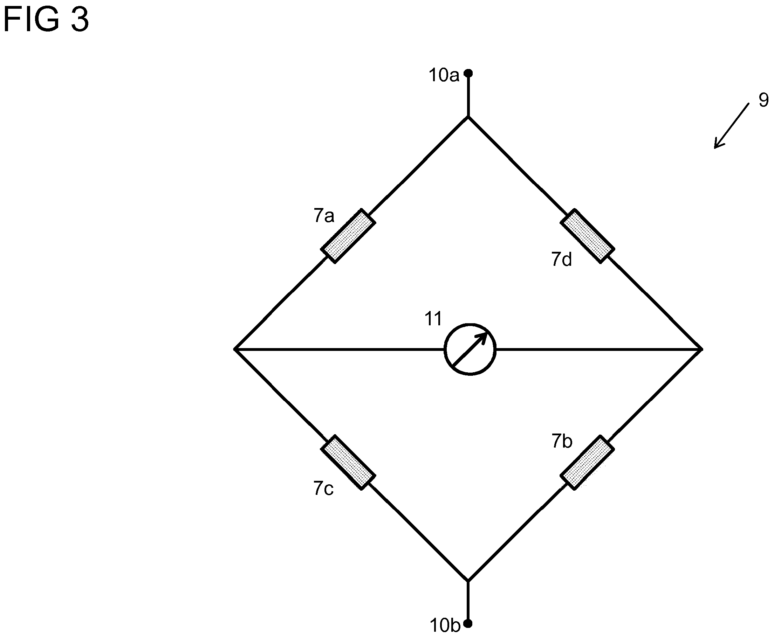

With four strain gauges 7a - 7d, the strain gauges 7a - 7d are advantageously disposed to form a Wheatstone bridge 9. A Wheatstone bride circuit is shown on FIG 3. According to this embodiment, the strain gauges 7a and 7b are diffused into, implanted into, and/or affixed to a first side of the anchor portion 3a. The strain gauges 7c and 7d are diffused into, implanted into, and/or affixed to a second side of the anchor portion 3a.

As the anchor portion 3a member bends, the strain gauges on one side increase in length while the strain gauges on the opposite side shorten. With (piezoelectric) resistors as strain gauges, the resistivity of the (piezoelectric) resistors on the first side of the anchor portion 3a increases. The resistivity of the (piezoelectric) resistors on the second side of the anchor portion 3a decreases accordingly.

A voltage applied to the terminals 10a, 10b of the circuit yields an electric output signal 11. The electric output signal 11 is proportional to the strain within the bending anchor portion 3a. The strain within the anchor portion 3a is proportional to the differential pressure. The arrangement of the strain gauges 7a - 7d in the form of a Wheatstone bridge 9 improves on accuracy.

The skilled person optionally employs a suitable amplifier to adjust the magnitude of the electric output signal 11. Operational amplifiers and/or (field effect) transistors are, by way of non-limiting example, suitable amplifiers. In an alternate embodiment, the skilled person modifies the Wheatstone bridge 9 into Carey Foster bridge.

According to a special embodiment, an oversampling technique is employed such as the technique introduced in col 4, l 29 - 37, of the patent US9148163B2. The use of oversampling can, for instance, improve on the signal-to-noise ratio of the electric output signal 11. The measurement bridge can also connect to the sensor input 2 of the signal processing circuit shown on FIG 1 of US9148163B2. According to another embodiment, a microcontroller 4 with an integrated analog-to-digital converter 9 as taught by US9148163B2, claim 1, is employed for analog-to-digital conversion. The skilled person also envisages Delta-Sigma modulation to convert analog signals into digital signals.

In a special embodiment, the differential pressure sensor also provides a temperature probe. The temperature probe is advantageously arranged near the resistors 7a - 7d. The skilled person selects a suitable temperature probe such as a PT100 resistor, PT1000 resistor, a NI1000 resistor, or similar. The skilled person uses suitable bonding wires to obtain readings from the temperature probe. A temperature probe inside the differential pressure sensor is employed in order to compensate for changes in temperature.

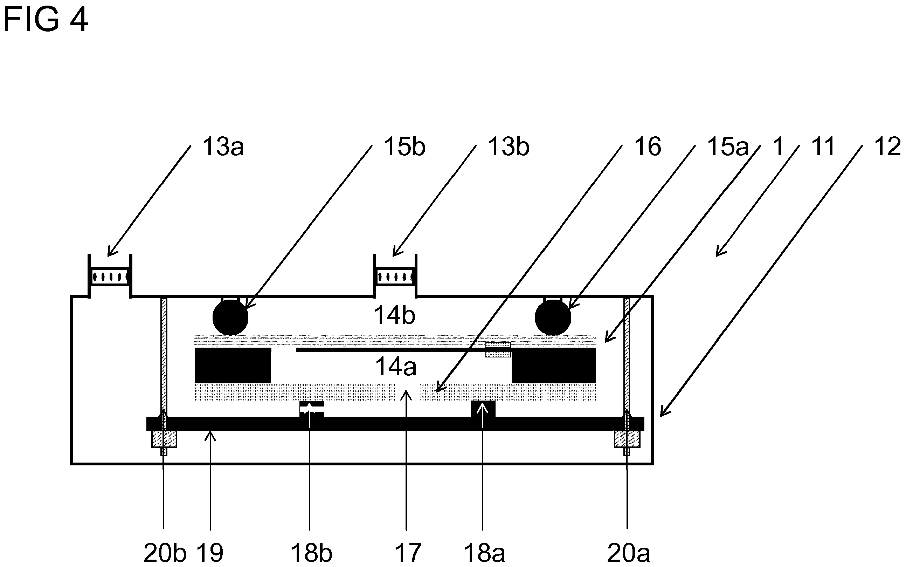

FIG 4 depicts a differential pressure transducer 11 with a resilient beam configuration 1 according to the instant disclosure. The resilient beam configuration 1 is disposed inside the housing 12 of the differential pressure sensor 11. The housing 12 comprises two ports 13a, 13b.

The two ports 13a, 13b each connect to conduits that are in fluid communication with separate chambers 14a, 14b inside the housing 12. The ports 13a, 13b are operable to allow gaseous fluids such as air into their respective chambers 14a, 14b. A measurement of differential pressure is carried out between the two chambers 14a, 14b by means of the resilient beam configuration 1.

In a special embodiment, a filter element is arranged inside at least one of the ports 13a, 13b. In an alternate embodiment, filter elements are arranged inside each of the two ports 13a, 13b. A filter element inhibits ingress of moisture and/or of particles into the housing 12. The filter element advantageously inhibits ingress of particulate matter with characteristic dimensions of 2.5 micrometers and/or of 10 micrometers.

A gasket 15a, 15b is interposed between the sensor element 1 and the housing 12. The gasket 15a, 15b is sufficiently impermeable to (gaseous) fluids and separates the two chambers 14a, 14b inside the housing 12. The gasket 15a, 15b advantageously is annular. In an embodiment, the gasket 15 is an O-ring. According to an aspect, to housing 12 provides an (annular) protrusion or a groove, such as an annular groove, to mechanically secure the gasket 15a, 15b. The groove advantageously is integral with the housing 12.

The skilled person chooses a material impermeable to fluids for the gasket 15a, 15b. The skilled person also chooses a gasket 15a, 15b that is compatible with the (gaseous) fluid inside the differential pressure transducer. It is envisaged that the gasket 15a, 15b is made of rubber such as silicone rubber. According to a special embodiment, the gasket 15a, 15b is made of EPDM rubber (ethylene propylene diene monomer (M-class) rubber).

A support disc 16 is disposed adjacent the resilient beam structure 1. The support disc 16 also functions to mechanically support the resilient beam configuration 1. The support disc 16 functions to mechanically support the frame 2 of the resilient beam configuration 1. The skilled person chooses compatible materials for the resilient beam configuration 1 and for the support disc 16. In an embodiment, the support disc 16 and the frame of the resilient beam configuration 1 are made of the same materials. According to an aspect, the support disc 16 and the frame 2 of the resilient beam configuration 1 are joined by glass frit bonding.

According to an aspect, the support disc 16 is substantially thicker than the frame 2. The frame 2 can, by way of non-limiting example, be less than 250 micrometers thick while the thickness of the support disc 16 can exceed 1 millimeter.

The support disc 16 provides a bore 17 with suitable dimensions. The bore 17 is required for fluid communication between the port 13a and the portion of the chamber 14a adjacent the paddle portion 3b of the resilient beam configuration 1. In an embodiment, the bore 17 is cylindrical. According to an aspect, the support disc 16 comprises a plurality of (cylindrical) bores. According to another embodiment, the support disc 16 is made of a fluid permeable material.

A spacer 18a, 18b is arranged adjacent the support disc 16 and opposite the frame 2. The spacer 18a, 18b preferably is annular. In an embodiment, the annular portion of the spacer 18a, 18b is between 0.8 and 2.0 millimeters wide. The outer diameter of the annular portion preferably ranges from 16 millimeters to 20 millimeters. The spacer 18a, 18b is advantageously made of a polymeric material.

According to an aspect, the spacer 18a, 18b comprises side arms that extend diametrically outward from the spacer. In an embodiment, the spacer 18a, 18b comprises four side arms. The side arms typically are between 4.0 millimeters and 8.0 millimeters long. The side arms function to align the spacer 18a, 18b inside the housing 12. No side arms are shown on FIG 4.

The spacer 18a, 18b also provides a duct with suitable dimensions. The duct through the spacer 18a, 18b is required for fluid communication between the port 13a and the portion of the chamber 14a adjacent the paddle portion 3b of the resilient beam configuration 1. According to an aspect, the duct through the spacer 18a, 18b is cylindrical. In an alternate embodiment, a gap along the spacer 18a, 18b provides fluid communication. In yet another embodiment, the spacer 18a, 18b comprises a duct and also a gap. In still another embodiment, the spacer 18a, 18b provides a plurality of gaps and/or ducts. According to still another embodiment, the spacer 18a, 18b is made of a fluid permeable material.

A circuit board 19 is arranged adjacent the spacer 18a, 18b and opposite the support disc 16. In an embodiment, the circuit board 19 is a printed circuit board. The (printed) circuit board 19 typically carries the electric and/or electronic components for signal processing as described above. To that end, the circuit board 19 connects to the sensor element 1 via suitable electric connectors such as pin connectors. FIG 4 shows no pin connectors.

The skilled person chooses a suitable affixation for the (printed) circuit board 19. The circuit board 19 can, by way of non-limiting example, be mounted to the housing 12 via tie-rods 20a, 20b. The skilled person chooses a circuit board 19 of suitable stiffness to mechanically couple the assembly comprising the circuit board 19, the spacer 18a, 18b, the support disc 16, etc In other words, the circuit board 19 secures the assembly 18, 16, 1, 15 by squeezing it against an inner wall of the housing 12.

In an alternate embodiment, the housing 12 provides struts and the circuit board 19 mechanically couples to these struts. To that end, the housing 12 can, by way of non-limiting example, provide three or four struts. The circuit board 19 is advantageously bolted to the struts of the housing 12. The affixation of the circuit board 19 to the struts entails enough pressure to mechanically secure the assembly 18, 16, 1, 15.

As disclosed in detail herein, the instant disclosure teaches a resilient beam configuration (1), the resilient beam configuration (1) comprising:
a frame (2), at least one resilient beam (3a, 3b);
wherein the at least one resilient beam (3a, 3b) comprises a resilient anchor portion (3a) and a paddle portion (3b);
wherein the resilient anchor portion (3a) connects the paddle portion (3b) to the frame (2);
wherein the paddle portion (3b) comprises a first surface (4);
wherein the paddle portion (3b) is configured to move from a first position to a second position in response to a pressure applied to the first surface (4) of the paddle portion (3b);
wherein the resilient anchor portion (3a) is configured to bend due to the movement of the paddle portion (3b) thereby producing a strain within the resilient anchor portion (3a);
wherein the resilient beam configuration (1) additionally comprises at least one arcuate member (5) interposed between the frame (2) and the paddle portion (3b);
wherein the at least one arcuate member (5) is made of a polymeric material having viscoelasticity, wherein the at least one arcuate member (5) mechanically connects the paddle portion (3b) to the frame (2); and
wherein the at least one arcuate member (5) is made of a polymeric material comprising synthetic rubber.

A viscoelastic material shows viscous and elastic characteristics in response to deformation.

According to an aspect of the instant disclosure, the resilient beam configuration (1) is or comprises a resilient beam structure (1). According to another aspect of the instant disclosure, the resilient beam configuration (1) is or comprises at least one resilient beam configuration (1).

It is envisaged that the resilient anchor portion (3a) mechanically connects the paddle portion (3b) to the frame (2).

In an embodiment, the paddle portion (3b) is a resilient paddle portion (3b). It is also envisaged that the paddle portion (3b) is or comprises a vane portion. The paddle portion (3b) preferably has the shape of a paddle and/or has the shape of a vane.

The at least one resilient beam (3a, 3b) preferably comprises a far end and the paddle portion (3b) is arranged at the far end of the at least one resilient beam (3a, 3b). The at least one resilient beam (3a, 3b) also comprises a near end and the resilient anchor portion (3a) is arranged at the near end of the at least one resilient beam (3a, 3b).

According to an aspect of the instant disclosure, the at least one arcuate member (5) connects the paddle portion (3b) to the frame (2). According to a special aspect of the instant disclosure, the at least one arcuate member (5) also mechanically connects the paddle portion (3b) to the frame (2).

The skilled person understands that the at least one arcuate member (5) is also configured to bend due to the movement of the paddle portion (3b).

The at least one arcuate member (5) is advantageously formed by an arcuate gap in the frame (2), the arcuate gap being filled with the polymeric material having viscoelasticity. The polymeric material having viscoelasticity preferably seals the configuration. Consequently, a (gaseous) fluid such as air cannot permeate the at least one arcuate member (5) from a first side of the resilient beam configuration (1) to a second side of the resilient beam configuration (1), the second side being opposite the first side.

The present disclosure also teaches any of the aforementioned resilient beam configurations (1),
wherein the at least one arcuate member (5) mechanically connects the paddle portion (3b) to the frame (2); and
wherein the at least one arcuate member (5) is made of a polymeric material comprising synthetic rubber.

The instant disclosure further teaches any of the aforementioned resilient beam configurations (1),
wherein the polymeric material having viscoelasticity comprises at least one of:
styrene-butadiene rubber,
synthetic rubber prepared from isoprene,
synthetic rubber prepared from chloroprene,
synthetic rubber prepared from isobutylene,
silicone rubber.

The polymeric material advantageously is or comprises room-temperature-vulcanizing silicone rubber. The polymeric materials can also comprise silicone rubber to be cured using ultraviolet light. The polymeric materials can further comprise high-temperature-vulcanizing silicone rubber.

According to an aspect of the instant disclosure, the polymeric material having viscoelasticity is selected from at least one of:
styrene-butadiene rubber,
synthetic rubber prepared from isoprene,
synthetic rubber prepared from chloroprene,
synthetic rubber prepared from isobutylene,
silicone rubber such as room-temperature-vulcanizing silicone rubber or high-temperature-vulcanizing silicone rubber or silicone rubber cured using ultraviolet light.

The instant disclosure also teaches any of the aforementioned resilient beam configurations (1),
wherein the at least one arcuate member (5) is made of a material having a Young's modulus of less than half a GigaPascal at three hundred Kelvins.

The at least one arcuate member (5) is preferably made of a material having a Young's modulus of less than one fifth of a GigaPascal (0.2 GigaPascals) at three hundred Kelvins. Ideally, the at least one arcuate member (5) is made of a material having a Young's modulus of less than one tenth of a GigaPascal (0.1 GigaPascals) at three hundred Kelvins. This choice of a material exhibiting a low value of Young's modulus confers advantages in terms of reduced sensitivity of the configuration (1) to temperature changes. The skilled person also prefers a polymeric material having viscoelasticity wherein Young's modulus does not vary drastically at temperatures near three hundred Kelvins.

The present disclosure still further teaches any of the aforementioned resilient beam configurations (1),
wherein the resilient anchor portion (3a) is made of a ceramics material.

It is envisaged that the frame (2) is also made of a ceramics material. The frame (2) and the resilient anchor portion (3a) are advantageously made of the same ceramics material. It is also envisaged that the paddle portion (3b) is made of a ceramics material. The paddle portion (3b) and the resilient anchor portion (3a) are advantageously made of the same ceramics material.

The present disclosure yet further teaches the aforementioned resilient beam configuration (1),
wherein the resilient anchor portion (3a) is made of a ceramics material comprising at least one of:
aluminum oxide ceramics having at least ninety-two percent purity,
aluminum oxide ceramics having at least ninety-six percent purity,
aluminum oxide ceramics having at least ninety-eight percent purity.

It is envisaged that the frame (2) is also made of a ceramics material comprising at least one of:
aluminum oxide ceramics having at least ninety-two percent purity,
aluminum oxide ceramics having at least ninety-six percent purity,
aluminum oxide ceramics having at least ninety-eight percent purity.

The frame (2) and the resilient anchor portion (3a) are advantageously made of the same ceramics material. It is also envisaged that the paddle portion (3b) is made of a ceramics material comprising at least one of:
aluminum oxide ceramics having at least ninety-two percent purity,
aluminum oxide ceramics having at least ninety-six percent purity,
aluminum oxide ceramics having at least ninety-eight percent purity.

The paddle portion (3b) and the resilient anchor portion (3a) are advantageously made of the same ceramics material.

In an alternate embodiment, the frame (2), the resilient anchor portion (3a) and/or the paddle portion (3b) are made of a material comprising silicon carbide and/or comprising silicon carbide ceramics.

The present disclosure also teaches any of the aforementioned resilient beam configurations (1),
wherein the resilient anchor portion (3a) is made of a material having a Young's modulus of at least one hundred GigaPascals at three hundred Kelvins.

Young's modulus is a mechanical property that measures stiffness. Young's modulus defines a relationship between stress and strain.

The resilient anchor portion (3a) is preferably made of a material having a Young's modulus of at least two hundred GigaPascals at three hundred Kelvins. Ideally, the resilient anchor portion (3a) is made of a material having a Young's modulus of at least four hundred GigaPascals at three hundred Kelvins. This choice of a material exhibiting a high value of Young's modulus confers advantages in terms of reduced sensitivity of the configuration (1) to temperature changes. The frame (2) and the resilient anchor portion (3a) are advantageously made of the same material. The frame (2) and the resilient anchor portion (3a) ideally form a single piece. The paddle portion (3b) and the resilient anchor portion (3a) are advantageously made of the same material. The paddle portion (3b) and the resilient anchor portion (3a) ideally form a single piece.

The instant disclosure further teaches any of the aforementioned resilient beam configurations (1),
wherein the frame (2) provides an aperture; and
wherein the at least one resilient beam (3a, 3b) projects into the aperture.

It is envisaged that the frame (2) has an aperture. It is also envisaged that the paddle portion (3b) projects into the aperture. It is further envisaged that the resilient anchor portion (3a) projects into the aperture.

The present disclosure yet further teaches any of the aforementioned resilient beam configurations (1),
wherein the paddle portion (3b) comprises a second surface; and
wherein the second surface is disposed opposite the first surface (4).

The first surface (4) of the paddle portion (3b) and the second surface of the paddle portion (3b) are preferably aligned in parallel. The first surface (4) of the paddle portion (3b) and the second surface of the paddle portion (3b) are typically spaced apart.

The first surface (4) of the paddle portion (3b) and the second surface of the paddle portion (3b) are ideally arranged on opposite sides of the paddle portion (3b).

The present disclosure also teaches any of the aforementioned resilient beam configurations (1),
wherein the first surface (4) of the paddle portion (3b) is in contact with a gaseous fluid selected from at least one of:
- air,
- carbon dioxide,
- helium,
- nitrogen,
- sulfur hexafluoride.

In an embodiment, the second surface of the paddle portion (3b) also is in contact with a gaseous fluid and/or with a gaseous medium selected from at least one of:
- air,
- carbon dioxide,
- helium,
- nitrogen,
- sulfur hexafluoride.

Ideally, the paddle portion (3b) is configured to move from a first position to a second position in response to a pressure applied by any one of the gaseous fluids as disclosed above to the first surface (4) of the paddle portion (3b). The gaseous fluid advantageously is adjacent the first surface (4) of the paddle portion (3b).

Ideally, the paddle portion (3b) is configured to move from a first position to a second position also in response to a pressure applied by any one of the gaseous fluids as disclosed above to the second surface of the paddle portion (3b). The gaseous fluid advantageously is adjacent the second surface of the paddle portion (3b).

The instant disclosure further teaches any of the aforementioned resilient beam configurations (1),
wherein the first surface (4) of the paddle portion (3b) is enveloped by the at least one arcuate member (5) and by the resilient anchor portion (3a).

It is envisaged that the first surface (4) of the paddle portion (3b) is surrounded by the at least one arcuate member (5) and/or by the resilient anchor portion (3a). It is envisaged that the resilient anchor portion (3a) and the at least one arcuate member (5) enclose the first surface (4) of the paddle portion (3b) .

The second surface of the paddle portion (3b) is advantageously enveloped by the at least one arcuate member (5) and by the resilient anchor portion (3a). In an embodiment, the second surface of the paddle portion (3b) is surrounded by the at least one arcuate member (5) and/or by the resilient anchor portion (3a). Also, the resilient anchor portion (3a) and the at least one arcuate member (5) can enclose the second surface of the paddle portion (3b).

The present disclosure further teaches any of the aforementioned resilient beam configurations (1),
wherein the at least one arcuate member (5) comprises a third surface;
wherein the third surface of the at least one arcuate member (5) is aligned in parallel with the first surface (4) of the paddle portion (3b);
wherein the first surface (4) of the paddle portion (3b) has a first surface area;
wherein the third surface of the at least one arcuate member (5) has a third surface area; and
wherein the first surface area is larger than the third surface area.

The third surface of the at least one arcuate member (5) preferably connects to the first surface (4) of the paddle portion (3b). The third surface of the at least one arcuate member (5) yet more preferably mechanically connects to the first surface (4) of the paddle portion (3b). The third surface of the at least one arcuate member (5) also is adjacent the first surface (4) of the paddle portion (3b).

According to an aspect of the present disclosure, the first surface area is larger than the third surface area by more than a factor one and a half (more than a factor 1.5). According to a special aspect of the present disclosure, the first surface area is larger than the third surface area by more than a factor two (more than a factor 2). Large ratios between the surface areas abate sensitivity to temperature changes.

In an embodiment, the second surface of the paddle portion (3b) has a second surface area;
the third surface of the at least one arcuate member (5) has a third surface area; and
the second surface area is larger than the third surface area.

According to an aspect of the present disclosure, the second surface area is larger than the third surface area by more than a factor one and a half (more than a factor 1.5). According to a special aspect of the present disclosure, the second surface area is larger than the third surface area by more than a factor two (more than a factor 2.0). Large ratios between the surface areas abate sensitivity to temperature changes.

The first surface area advantageously completely covers the first surface (4) of the paddle portion (3b). The second surface area advantageously completely covers the second surface of the paddle portion (3b). The third surface area advantageously completely covers the third surface of the at least one arcuate member (5).

The instant disclosure yet further teaches any of the aforementioned resilient beam configurations (1),
wherein the resilient beam configuration (1) further comprises at least one strain gauge (7a - 7d) and wherein the at least one strain gauge (7a - 7d) is diffused into and/or implanted into and/or affixed to the at least one resilient beam (3a, 3b) such that the at least one strain gauge (7a - 7d) is configured to produce an output signal (11) in response to a strain within the at least one resilient beam (3a, 3b).

In an embodiment, the at least one strain gauge (7a - 7d) is diffused into and/or implanted into and/or affixed to the resilient anchor portion (3a). Preferably, the at least one strain gauge (7a - 7d) is diffused into and/or implanted into and/or affixed to the resilient anchor portion (3a) such that the at least one strain gauge (7a - 7d) is configured to produce an output signal (11) in response to the strain within the resilient anchor portion (3a).

According to an aspect of the instant disclosure, the at least one strain gauge (7a - 7d) is or comprises a fiber Bragg grating. The fiber Bragg grating advantageously produces signals indicative of strain and/or signals indicative of temperature. Fiber Bragg gratings offer advantages in harsh and/or in hazardous environments.

In an embodiment, the output signal (11) is or comprises an electric output signal. In an alternate embodiment, the output signal (11) is or comprises an optical output signal.

The present disclosure also teaches any of the aforementioned resilient beam configurations (1),
wherein the at least one arcuate member (5) comprises a portion having a bulge.

It is envisaged that the portion having the bulge covers and/or comprises all the at least one arcuate member (5). It is also envisaged that the portion having the bulge covers and/or comprises substantially all the at least one arcuate member (5).

The instant disclosure still teaches any of the aforementioned resilient beam configurations (1),
wherein the first surface (4) of the paddle portion (3b) is substantially circular;
wherein the first surface (4) has a diameter dimension; and
wherein the diameter dimension of the first surface (4) is less than twenty-five millimeters.

According to a special aspect of the instant disclosure, the first surface (4) of the paddle portion (3b) is circular;
the first surface (4) has a diameter dimension; and
the diameter dimension of the first surface (4) is less than twenty-five millimeters.

According to another aspect of the instant disclosure, the second surface of the paddle portion (3b) is circular or is substantially circular;
the second surface has a diameter dimension; and
the diameter dimension of the second surface is less than twenty-five millimeters.

In an embodiment, the diameter dimension of the first surface (4) is less than twenty millimeters or even less than fifteen millimeters. Also, the diameter dimension of the second surface is less than twenty millimeters or even less than fifteen millimeters. Small paddle portions (3b) yield miniaturized sensors.

The diameter dimension of the first surface (4) advantageously is the largest diameter dimension of or along the first surface (4) of the paddle portion (3b). The diameter dimension of the second surface advantageously is the largest diameter dimension of or along the second surface of the paddle portion (3b).

Circular or substantially circular surfaces of the paddle portion (3b) alleviate manufacture of the configuration (1). The instant disclosure also teaches a differential pressure transducer comprising a housing 12 having a first port 13a and a second port 13b, a first chamber 14a inside the housing 12, a second chamber 14b inside the housing 12, the pressure transducer further comprising at least a resilient beam configuration 1 according to the instant disclosure, wherein the first chamber 14a is in fluid communication with the first port 13a, wherein the second chamber 14b is in fluid communication with the second port 13b, wherein the at least a sensor element 1 is disposed inside the housing 12 between the first chamber 14a and the second chamber 14b, and wherein the at least a resilient beam configuration 1 is configured to generate a signal indicative of (proportional to) a differential pressure between a fluid inside the first chamber 14a and a fluid inside the second chamber 14b.

The instant disclosure also teaches the aforementioned differential pressure transducer further comprising at least a seal member 15a, 15b, wherein the at least a seal member 15a, 15b seals the first chamber 14a against the second chamber 14b.

The instant disclosure also teaches an aforementioned differential pressure transducer further comprising at least a filter, wherein the at least a filter 13a, 13b is arranged inside a port 13a, 13b of the differential pressure transducer.

The instant disclosure also teaches an aforementioned differential pressure transducer further comprising at least two filters, wherein a filter 13a, 13b is arranged inside each port 13a, 13b of the differential pressure transducer.

The instant disclosure teaches a circuit for heating, cooling, air-conditioning and/or ventilation having at least a differential pressure transducer or a resilient beam configuration 1 according to the instant disclosure.

The instant disclosure teaches a circuit for heating, cooling, air-conditioning and/or ventilation having at least a differential pressure transducer or a resilient beam configuration 1 according to instant disclosure, wherein the circuit is a variable air volume system.

It is also envisaged that a differential pressure transducer is employed to measure differential pressure of a fluid, in particular of a (combustible) gas and/or of air. This particular type of differential pressure transducer can, by way of non-limiting example, be arranged in a (side channel of) a Venturi tube and/or in a Venturi burner. The differential pressure transducer is preferably employed to regulate and/or (PID) control parameters of the burner such as the speed of a blower and/or gas to air ratios and/or valve positions.

It should be understood that the foregoing relates only to certain embodiments of the disclosure and that numerous changes can be made therein without departing from the scope of the disclosure as defined by the following claims. It should also be understood that the disclosure is not restricted to the illustrated embodiments and that various modifications can be made within the scope of the following claims.

### Reference numerals

1 resilient beam configuration
2 frame
3a resilient anchor portion
3b paddle portion
4 first surface
5 arcuate member
6 line
7a - 7d strain gauges
8 line
9 Wheatstone bridge
10a, 10b terminals of a bridge circuit
11 electric output signal
12 container
13a, 13b ports
14a, 14b chambers
15a, 15b gasket
16 support disc
17 bore
18a, 18b spacer (with duct)
19 circuit board
20a, 20b tie-rods

## Claims

1. A resilient beam configuration (1), the resilient beam configuration (1) comprising:
a frame (2), at least one resilient beam (3a, 3b);
wherein the at least one resilient beam (3a, 3b) comprises a resilient anchor portion (3a) and a paddle portion (3b);
wherein the resilient anchor portion (3a) connects the paddle portion (3b) to the frame (2);
wherein the paddle portion (3b) comprises a first surface (4);
wherein the paddle portion (3b) is configured to move from a first position to a second position in response to a pressure applied to the first surface (4) of the paddle portion (3b);
wherein the resilient anchor portion (3a) is configured to bend due to the movement of the paddle portion (3b) thereby producing a strain within the resilient anchor portion (3a);
wherein the resilient beam configuration (1) additionally comprises at least one arcuate member (5) interposed between the frame (2) and the paddle portion (3b);
wherein the at least one arcuate member (5) is made of a polymeric material having viscoelasticity;
wherein the at least one arcuate member (5) mechanically connects the paddle portion (3b) to the frame (2);
**characterised in that**
the at least one arcuate member (5) is made of the polymeric material comprising synthetic rubber.

2. The resilient beam configuration (1) according to claim 1,
wherein the polymeric material having viscoelasticity comprises at least one of:
styrene-butadiene rubber,
synthetic rubber prepared from isoprene,
synthetic rubber prepared from chloroprene,
synthetic rubber prepared from isobutylene,
silicone rubber.

3. The resilient beam configuration (1) according to any of the claims 1 to 2,
wherein the at least one arcuate member (5) is made of a material having a Young's modulus of less than half a GigaPascal at three hundred Kelvins.

4. The resilient beam configuration (1) according to any of the claims 1 to 3,
wherein the resilient anchor portion (3a) is made of a ceramics material.

5. The resilient beam configuration (1) according to claim 4,
wherein the resilient anchor portion (3a) is made of a ceramics material comprising at least one of:
aluminum oxide ceramics having at least ninety-two percent purity,
aluminum oxide ceramics having at least ninety-six percent purity,
aluminum oxide ceramics having at least ninety-eight percent purity.

6. The resilient beam configuration (1) according to any of the claims 1 to 5,
wherein the resilient anchor portion (3a) is made of a material having a Young's modulus of at least one hundred GigaPascals at three hundred Kelvins.

7. The resilient beam configuration (1) according to any of the claims 1 to 6,
wherein the frame (2) provides an aperture; and
wherein the at least one resilient beam (3a, 3b) projects into the aperture.

8. The resilient beam configuration (1) according to any of the claims 1 to 7,
wherein the paddle portion (3b) comprises a second surface; and
wherein the second surface is disposed opposite the first surface (4).

9. The resilient beam configuration (1) according to any of the claims 1 to 8,
wherein the first surface (4) of the paddle portion (3b) is in contact with a gaseous fluid selected from at least one of:
- air,
- carbon dioxide,
- helium,
- nitrogen,
- sulfur hexafluoride.

10. The resilient beam configuration (1) according to any of the claims 1 to 9,
wherein the first surface (4) of the paddle portion (3b) is enveloped by the at least one arcuate member (5) and by the resilient anchor portion (3a).

11. The resilient beam configuration (1) according to any of the claims 1 to 10,
wherein the at least one arcuate member (5) comprises a third surface;
wherein the third surface of the at least one arcuate member (5) is aligned in parallel with the first surface (4) of the paddle portion (3b);
wherein the first surface (4) of the paddle portion (3b) has a first surface area;
wherein the third surface of the at least one arcuate member (5) has a third surface area; and
wherein the first surface area is larger than the third surface area.

12. The resilient beam configuration (1) according to any of the claims 1 to 11,
wherein the resilient beam configuration (1) further comprises at least one strain gauge (7a - 7d) and wherein the at least one strain gauge (7a - 7d) is diffused into and/or implanted into and/or affixed to the at least one resilient beam (3a, 3b) such that the at least one strain gauge (7a - 7d) is configured to produce an output signal (11) in response to a strain within the at least one resilient beam (3a, 3b).

13. The resilient beam configuration (1) according to any of the claims 1 to 12,
wherein the at least one arcuate member (5) comprises a portion having a bulge.

14. The resilient beam configuration (1) according to any of the claims 1 to 13,
wherein the first surface (4) of the paddle portion (3b) is substantially circular;
wherein the first surface (4) has a diameter dimension; and
wherein the diameter dimension of the first surface (4) is less than twenty-five millimeters.

## Patentansprüche

1. Elastische Balkenstruktur (1), wobei die elastische Balkenstruktur (1) umfasst:
einen Rahmen (2), wenigstens einen elastischen Balken (3a, 3b);
wobei der wenigstens eine elastische Balken (3a, 3b) einen elastischen Ankerteil (3a) und einen Paddelteil (3b) umfasst;
wobei der elastische Ankerteil (3a) den Paddelteil (3b) mit dem Rahmen (2) verbindet;
wobei der Paddelteil (3b) eine erste Oberfläche (4) umfasst;
wobei der Paddelteil (3b) ausgebildet ist, als Reaktion auf einen an der ersten Oberfläche (4) des Paddelteils (3b) angelegten Druck von einer ersten Stellung in eine zweite Stellung zu bewegen;
wobei der elastische Ankerteil (3a) ausgebildet ist, sich aufgrund der Bewegung des Paddelteils (3b) zu biegen, und
dadurch eine Dehnung innerhalb des elastischen Ankerteils (3a) zu erzeugen;
wobei die elastische Balkenstruktur (1) zusätzlich wenigstens ein gekrümmtes Element (5) umfasst, das zwischen dem Rahmen (2) und dem Paddelteil (3b) angeordnet ist;
wobei das wenigstens eine gekrümmte Element (5) aus einem Polymermaterial, das Viskoelastizität aufweist, hergestellt ist;
wobei das wenigstens eine gekrümmte Element (5) den Paddelteil (3b) mechanisch mit dem Rahmen (2) verbindet;
**dadurch gekennzeichnet, dass**
das wenigstens eine gekrümmte Element (5) aus dem Polymermaterial hergestellt ist, das synthetischen Kautschuk umfasst.

2. Elastische Balkenstruktur (1) gemäß Anspruch 1, wobei das Polymermaterial, das Viskoelastizität aufweist, wenigstens eines von:
Styrol-Butadien-Kautschuk,
synthetischem Kautschuk, der aus Isopren hergestellt ist,
synthetischem Kautschuk, der aus Chloropren hergestellt ist,
synthetischem Kautschuk, der aus Isobutylen hergestellt ist,
Siliconkautschuk,
umfasst.

3. Elastische Balkenstruktur (1) gemäß einem der Ansprüche 1 bis 2,
wobei das wenigstens eine gekrümmte Element (5) aus einem Material mit einem Young-Modul von weniger als einem halben Gigapascal bei dreihundert Kelvin hergestellt ist.

4. Elastische Balkenstruktur (1) gemäß einem der Ansprüche 1 bis 3,
wobei der elastische Ankerteil (3a) aus einem Keramikmaterial hergestellt ist.

5. Elastische Balkenstruktur (1) gemäß Anspruch 4, wobei der elastische Ankerteil (3a) aus einem Keramikmaterial hergestellt ist, das wenigstens eines von:
Aluminiumoxidkeramik mit wenigstens zweiundneunzig Prozent Reinheit,
Aluminiumoxidkeramik mit wenigstens sechsundneunzig Prozent Reinheit,
Aluminiumoxidkeramik mit wenigstens achtundneunzig Prozent Reinheit,
umfasst.

6. Elastische Balkenstruktur (1) gemäß einem der Ansprüche 1 bis 5,
wobei der elastische Ankerteil (3a) aus einem Material mit einem Young-Modul von wenigstens einhundert Gigapascal bei dreihundert Kelvin hergestellt ist.

7. Elastische Balkenstruktur (1) gemäß einem der Ansprüche 1 bis 6,
wobei der Rahmen (2) eine Öffnung aufweist; und
wobei der wenigstens eine elastische Balken (3a, 3b) in die Öffnung ragt.

8. Elastische Balkenstruktur (1) gemäß einem der Ansprüche 1 bis 7,
wobei der Paddelteil (3b) eine zweite Oberfläche umfasst; und
wobei die zweite Oberfläche gegenüber der ersten Oberfläche (4) angeordnet ist.

9. Elastische Balkenstruktur (1) gemäß einem der Ansprüche 1 bis 8,
wobei die erste Oberfläche (4) des Paddelteils (3b) in Kontakt mit einem gasförmigen Fluid steht, das ausgewählt ist aus wenigstens einem von:
- Luft,
- Kohlendioxid,
- Helium,
- Stickstoff,
- Schwefelhexafluorid.

10. Elastische Balkenstruktur (1) gemäß einem der Ansprüche 1 bis 9,
wobei die erste Oberfläche (4) des Paddelteils (3b) von dem wenigstens einen gekrümmten Element (5) und dem elastischen Ankerteil (3a) umgeben ist.

11. Elastische Balkenstruktur (1) gemäß einem der Ansprüche 1 bis 10,
wobei das wenigstens eine gekrümmte Element (5) eine dritte Oberfläche umfasst;
wobei die dritte Oberfläche des wenigstens einen gekrümmten Elements (5) parallel zu der ersten Oberfläche (4) des Paddelteils (3b) ausgerichtet ist; wobei die erste Oberfläche (4) des Paddelteils (3b) einen ersten Flächeninhalt aufweist;
wobei die dritte Oberfläche des wenigstens einen gekrümmten Elements (5) einen dritten Flächeninhalt aufweist; und
wobei der erste Flächeninhalt größer als der dritte Flächeninhalt ist.

12. Elastische Balkenstruktur (1) gemäß einem der Ansprüche 1 bis 11,
wobei die elastische Balkenstruktur (1) ferner wenigstens einen Dehnungsmesser (7a-7d) umfasst und wobei der wenigstens eine Dehnungsmesser (7a-7d) in den wenigstens einen elastischen Balken (3a, 3b) diffundiert und/oder darin implantiert und/oder daran befestigt ist, so dass der wenigstens eine Dehnungsmesser (7a-7d) ausgebildet ist, ein Ausgangssignal (11) in Reaktion auf eine Dehnung in dem wenigstens einen elastischen Balken (3a, 3b) zu erzeugen.

13. Elastische Balkenstruktur (1) gemäß einem der Ansprüche 1 bis 12,
wobei das wenigstens eine gekrümmte Element (5) einen Teil mit einer Ausbauchung umfasst.

14. Elastische Balkenstruktur (1) gemäß einem der Ansprüche 1 bis 13,
wobei die erste Oberfläche (4) des Paddelteils (3b) im Wesentlichen kreisförmig ist;
wobei die erste Oberfläche (4) eine Durchmesserabmessung aufweist; und
wobei die Durchmesserabmessung der ersten Oberfläche (4) weniger als fünfundzwanzig Millimeter beträgt.

## Revendications

1. Configuration de bras résilient (1), la configuration de bras résilient (1) comprenant :
un cadre (2), au moins un bras résilient (3a, 3b) ;
dans laquelle l'au moins un bras résilient (3a, 3b) comprend une partie d'ancrage résiliente (3a) et une partie de palette (3b) ;
dans laquelle la partie d'ancrage résiliente (3a) raccorde la partie de palette (3b) au cadre (2) ;
dans laquelle la partie de palette (3b) comprend une première surface (4) ;
dans laquelle la partie de palette (3b) est configurée pour se déplacer d'une première position à une seconde position en réponse à une pression appliquée sur la première surface (4) de la partie de palette (3b) ;
dans laquelle la partie d'ancrage résiliente (3a) est configurée pour fléchir en raison du mouvement de la partie de palette (3b), ainsi produisant une déformation à l'intérieur de la partie d'ancrage résiliente (3a) ;
dans laquelle la configuration de bras résilient (1) comprend en outre au moins un élément arqué (5) interposé entre le cadre (2) et la partie de palette (3b) ;
dans laquelle l'au moins un élément arqué (5) est fait d'un matériau polymère ayant une viscoélasticité ;
dans laquelle l'au moins un élément arqué (5) raccorde mécaniquement la partie de palette (3b) au cadre (2) ;
**caractérisé en ce que**
l'au moins un élément arqué (5) est fait du matériau polymère comprenant du caoutchouc synthétique.

2. Configuration de bras résilient (1) selon la revendication 1,
dans laquelle le matériau polymère ayant une viscoélasticité comprend au moins un de :
caoutchouc de styrène-butadiène,
caoutchouc synthétique préparé à partir d'isoprène,
caoutchouc synthétique préparé à partir de chloroprène,
caoutchouc synthétique préparé à partir d'isobutylène,
caoutchouc de silicone.

3. Configuration de bras résilient (1) selon l'une quelconque des revendications 1 à 2,
dans laquelle l'au moins un élément arqué (5) est fait d'un matériau ayant un module de Young de moins de la moitié d'un GigaPascal à trois cents Kelvins.

4. Configuration de bras résilient (1) selon l'une quelconque des revendications 1 à 3,
dans laquelle la partie d'ancrage résiliente (3a) est faite d'un matériau céramique.

5. Configuration de bras résilient (1) selon la revendication 4, dans laquelle la partie d'ancrage résiliente (3a) est fait d'un matériau céramique comprenant au moins un de:
céramique d'oxyde d'aluminium ayant au moins quatre-vingt-douze pour cent de pureté,
céramique d'oxyde d'aluminium ayant au moins quatre-vingt-seize pour cent de pureté,
céramique d'oxyde d'aluminium ayant au moins quatre-vingt-dix-huit pour cent de pureté.

6. Configuration de bras résilient (1) selon l'une quelconque des revendications 1 à 5,
dans laquelle la partie d'ancrage résiliente (3a) est faite d'un matériau ayant un module de Young d'au moins un cent GigaPascals à trois cents Kelvins.

7. Configuration de bras résilient (1) selon l'une quelconque des revendications 1 à 6,
dans laquelle le cadre (2) fournit une ouverture ; et dans laquelle l'au moins un bras résilient (3a, 3b) fait saillie dans l'ouverture.

8. Configuration de bras résilient (1) selon l'une quelconque des revendications 1 à 7,
dans laquelle la partie de palette (3b) comprend une deuxième surface ; et
dans laquelle la deuxième surface est disposée de façon opposée à la première surface (4).

9. Configuration de bras résilient (1) selon l'une quelconque des revendications 1 à 8,
dans laquelle la première surface (4) de la partie de palette (3b) est en contact avec un fluide gazeux sélectionné à partir d'au moins un de:
- air,
- dioxyde de carbone,
- hélium,
- azote,
- hexafluorure de soufre.

10. Configuration de bras résilient (1) selon l'une quelconque des revendications 1 à 9,
dans laquelle la première surface (4) de la partie de palette (3b) est enveloppée par l'au moins un élément arqué (5) et par la partie d'ancrage résiliente (3a).

11. Configuration de bras résilient (1) selon l'une quelconque des revendications 1 à 10,
dans laquelle l'au moins un élément arqué (5) comprend une troisième surface ;
dans laquelle la troisième surface de l'au moins un élément arqué (5) est alignée en parallèle avec la première surface (4) de la partie de palette (3b) ; dans laquelle la première surface (4) de la partie de palette (3b) a une première superficie ;
dans laquelle la troisième surface de l'au moins un élément arqué (5) a une troisième superficie ; et
dans laquelle la première superficie est supérieure à la troisième superficie.

12. Configuration de bras résilient (1) selon l'une quelconque des revendications 1 à 11,
dans laquelle la configuration de bras résilient (1) comprend en outre au moins un extensomètre (7a - 7d) et dans laquelle l'au moins un extensomètre (7a - 7d) est diffusé dans et/ou implanté dans et/ou fixé à l'au moins un bras résilient (3a, 3b) de telle sorte que l'au moins un extensomètre (7a - 7d) soit configuré pour produire un signal de sortie (11) en réponse à une déformation à l'intérieur de l'au moins un bras résilient (3a, 3b).

13. Configuration de bras résilient (1) selon l'une quelconque des revendications 1 à 12,
dans laquelle l'au moins un élément arqué (5) comprend une partie ayant un renflement.

14. Configuration de bras résilient (1) selon l'une quelconque des revendications 1 à 13,
dans laquelle la première surface (4) de la partie de palette (3b) est essentiellement circulaire ;
dans laquelle la première surface (4) a une dimension de diamètre ; et
dans laquelle la dimension de diamètre de la première surface (4) est inférieure à vingt-cinq millimètres.
